# EUROPEAN PATENT APPLICATION

(11) **EP 2 096 624 A1**
(43) Date of publication of application: **02.09.2009**
(21) Application number: 08250673.4
(22) Date of filing: 28.02.2008
(51) Int. Cl.: G09G 3/34, G06F 1/32

(54) **Portable electronic device automatically controlling back light unit thereof and method for the same**

(71) Applicant: Mobinnova Corp, Taoyuan City, Taoyuan County 330 (TW)
(72) Inventor: Shih, Yung-Ho, Bellevue, Washington 98006 (US); Kuan, Ping-Hung, Taoyuan County 330 (TW)
(74) Representative: Cheyne, John Robert Alexander M.

(57) **Abstract**

A method automatically controls a back light unit (26) in a display (22) of a portable electronic device (2). A back light unit (26) in the display (2) is turned on when an input keystroke is detected. When an idle time of the portable electronic device (2) exceeds a threshold time, an image-fetching unit (23) is activated to fetch image at front side thereof. The back light unit (26) keeps lighting on when a user face feature is identified in the fetched image. The back light unit (26) is turned off to save power when no user face feature is identified in the fetched image.

## Description

### BACKGROUND OF THE INVENTION

### 1. Field of the Invention

The present invention relates to a method automatically controlling a back light unit, especially to a method automatically controlling a back light unit based on a detection of user face feature.

### 2. Description of Prior Art

Back light module is inevitable component in LCD (liquid crystal display) panel, because liquid crystal is not a self-illuminating device and relies on back light module to provide uniform light source. The back light module can be categorized into front light scheme and back light scheme. More particularly, the back light scheme includes edge lighting, bottom lighting and hollow structure, depending on practical requirement and the position of lamp. Among those structures, the edge lighting structure is most popular, wherein the light source is placed on single side of the back light module, and light guiding plate is formed by non-printing process such as mold injection process. The edge-lighting back light module has the advantages of light weight, compact size, low profile and low power consumption. Thereof it is widely used for small and medium size display (below 18 inches), especially for mobile phone, PDA, smart phone and laptop application.

Portable electronic devices have more power and versatile functions as the progress of mobile communication and multimedia technology. Moreover, the portable electronic devices are developed to incorporate digital camera for still image recording, video recording and video phone application. However, portable electronic devices with imaging function have severe space limitation because lens and battery also have considerable volume. Therefore, it is important to develop portable electronic devices with optimal power management to reduce unwanted power consumption.

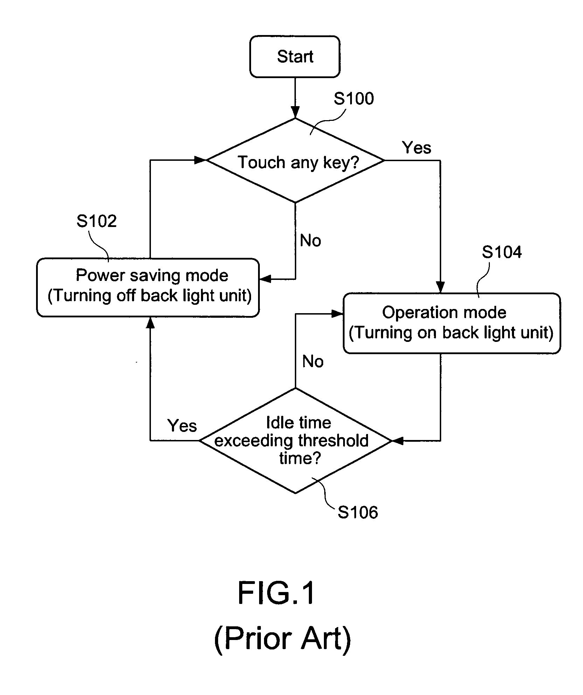

One of the most important power managements of portable electronic devices is for the power management of LCD. Fig. 1 shows a power saving scheme for an LCD used for an electronic device. The electronic device is powered on and keystroke is detected in step S100. When there is no keystroke, the electronic device performs a power saving process to turn off the back light unit thereof in step S102. When any keystroke is present, the electronic device is judged to be in operation and the back light unit keeps lighting in step S104. Step S106 judges whether an idle time of the electronic device exceeds a threshold time. When the idle time of the electronic device does not exceed the threshold time, the step S104 is performed to keep lighting the back light unit. When the idle time of the electronic device exceeds the threshold time, the step S102 is performed to force the electronic device to perform the power saving process to turn off the back light unit thereof. When the electronic device is in power saving mode, a keystroke or a touch on the screen is necessary to exit the power saving mode. However, the keystroke or the touch on the screen may cause wrong input or wrong operation of the electronic device, which is troublesome to user.

Taiwan Patent No I273818 discloses a method for automatically adjusting the brightness of back light unit in an electronic device. A digital camera module is used to sense an ambient brightness, and the ambient brightness is used to automatically adjust the brightness of the back light unit to save the power of the electronic device. More particularly, the digital camera module keeps sensing the ambient brightness when a user operates the electronic device. However, the back light unit is still automatically turned off when the user is absorbed in reading display content of the electronic device and the electronic device is idled for a while. At this time, user needs to press a keystroke or exerts a touch on the screen to exit the power saving mode. However, the keystroke or the touch on the screen may interrupt the operation of user. Moreover, the constant operation of the digital camera module also consumes power.

As can be seen from above description, the conventional portable electronic device sets a threshold time for turning off the back light unit in order to save power. This inflexible design may cause inconvenience to user.

### SUMMARY OF THE INVENTION

It is an object of the subject application to provide a method automatically controlling a back light unit based on a detection of user face feature.

Accordingly, the present invention provides a method automatically controls a back light unit in a display of a portable electronic device. A back light unit in the display is turned on when an input keystroke is detected. When an idle time of the portable electronic device exceeds a threshold time, an image-fetching unit is activated to fetch image at front side thereof. The back light unit keeps lighting on when a user face feature is identified in the fetched image. The back light unit is turned off to save power when no user face feature is identified in the fetched image. Moreover, a portable electronic device implemented with this method is also disclosed.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows a power saving scheme for an LCD used for an electronic device.
Fig. 2 shows the block diagram of a controlling circuit for back light unit of an electronic device according to the present invention.
Fig. 3 shows the flowchart for controlling the back light unit in the display of electronic device according to the present invention.
Fig. 4 depicts a scenario for demonstration the usage of the present invention.

### DETAILED DESCRIPTION OF THE INVENTION

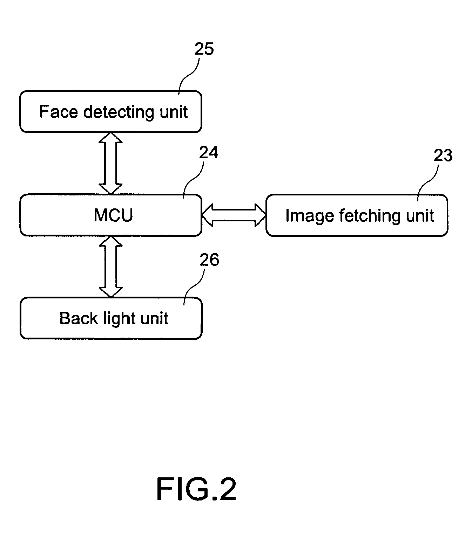

Fig. 2 shows the block diagram of a controlling circuit for back light unit of an electronic device according to the present invention. The controlling circuit is used to control a back light unit 26 and comprises a micro processor unit (MCU) 24, an image fetching unit 23 and a face detecting unit 25.

The MCU 24 is electrically connected to the image fetching unit 23, the face detecting unit 25 and the back light unit 26. The MCU 24 is used to process the image signal fetched by the image fetching unit 23. The image signal fetched by the image fetching unit 23 is processed by the face detecting unit 25 to determine whether the back light unit 26 needs continuous operation. The MCU 24 uses a built in timer (not shown) to count an idle time of the electronic device (not shown).

The image fetching unit 23 is electrically connected to the micro processor unit 24 and is used to fetch an image signal for user face. In the shown embodiment, the image fetching unit 23 is one of a camera module, a camera and a webcam.

The face detecting unit 25 is implemented by one of read only memory (ROM), a random access memory (RAM) and an extended memory. The face detecting unit 25 is electrically connected to the MCU 24 and stores a face-feature algorithm. The face-feature algorithm can be one of neural network face-feature algorithm, color-based face-feature algorithm, rule-based face-feature algorithm and elliptical edge face-feature algorithm. For the neural network face-feature algorithm, a training process is necessary and detection accuracy depends on the quality of training material. The color-based face-feature algorithm exploits the characteristics of human color in a color space and establishes a skin-color distribution model for identification. The color-based face-feature algorithm has the advantage of fast processing and immune to human gesture.

The rule-based face-feature algorithm identifies user face by human face feature. Generally human face has brighter color than that of upper part of human head. According to this know-how, we can make a corresponding rule for detection. In such a way, the rule-based face-feature algorithm can be very effective for people with hair and white skin. On the contrary, for people with dark skin might have difficulty to be identified. Therefore, this algorithm has flexibility in customized rules, but difficulty in judgment when the rule is not satisfied.

The elliptical edge face-feature algorithm uses the assumption that human face has ellipse-like shape and clear boundary is present between human face and background. This algorithm has the advantages of simplicity and fast process.

The back light unit 26 is electrically connected to the MCU 24 and arranged on one side of the display of the electronic device. The back light unit 26 is controlled by the MCU 24 to turn on or turn off.

The MCU 24 comprises a timer to count an activation time of the back light unit 26. When the activation time of the back light unit 26 exceeds a time threshold, the image fetching unit 23 fetches an image at front side thereof. The fetched image is sent to the MCU 24 and then sent to the face detecting unit 25. When an algorithm in the face detecting unit 25 identifies a user face feature in the fetched image, the face detecting unit 25 informs the MCU 24 to continuous turn on the back light unit 26.

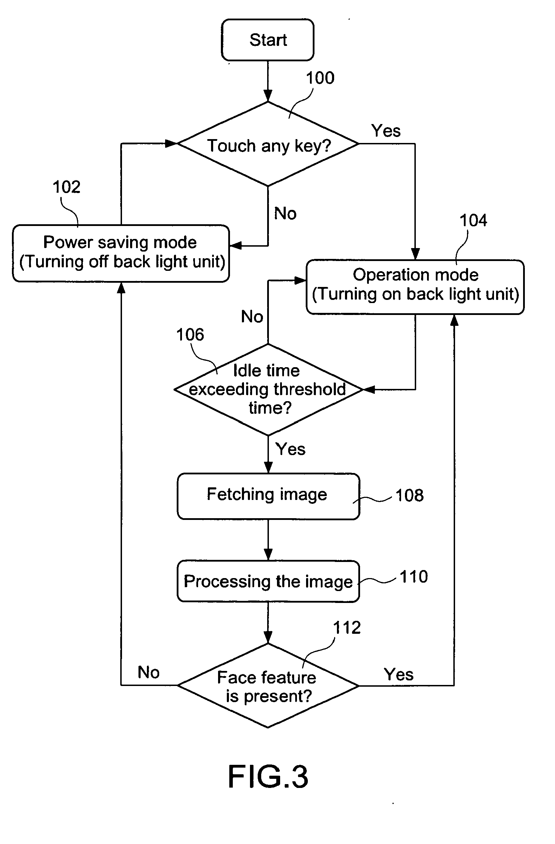

Fig. 3 shows the flowchart for controlling the back light unit in the display of electronic device according to the present invention. The electronic device is powered on and keystroke is detected in step 100. When there is no keystroke, the electronic device performs a power saving process to turn off the back light unit thereof in step 102. When there is any keystroke, the electronic device is judged to be in operation and the back light unit keeps lighting in step 104. Afterward, step 106 is performed to judge whether the idle time of the electronic device exceeds a time threshold. When the idle time of the electronic device does not exceed a time threshold, the process is back to step 104 to keep lighting the back light unit.

When the idle time of the electronic device exceeds the threshold time, the image fetching unit 23 fetches an image at front side thereof in step 108. The fetched image is sent to the MCU 24 and then sent to the face detecting unit 25 in step 110. The fetched image is accessed to judge whether a user face feature is present in the fetched image in step 112. When a user face feature is present in the fetched image, step 104 is performed to keep lighting the back light unit. When a user face feature is not present in the fetched image, the procedure is back to step 102, where the electronic device performs a power saving process to turn off the back light unit.

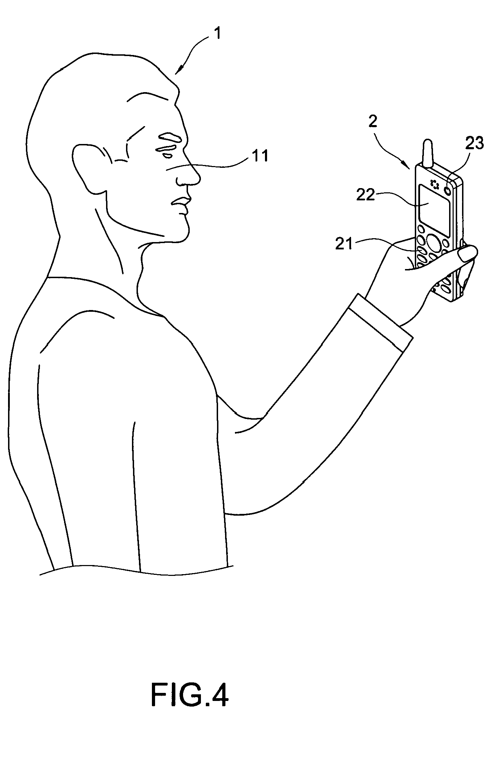

Fig. 4 depicts a scenario for demonstration the usage of the present invention. In this figure, a user 1 uses a portable electronic device 2 (such as mobile phone, PDA or laptop) and input his schedule (or week schedule) by keyboard 21. The portable electronic device 2 is in idle state when the user ponders his schedule and does not have input. The timer in the portable electronic device 2 counts the idle time and a MCU judges whether the idle time exceeds a threshold time for turning off back light unit in the display 22. When the user 1 resumes operating the portable electronic device 2 before the expiration of the threshold time, the back light unit in the display 22 keeps lighting. On the contrary, when the user 1 fails to operate the portable electronic device 2 after the expiration of the threshold time, an image fetching unit 23 adjacent to the display 22 is activated to fetch an image at front side of the image fetching unit 23. The fetched image is processed in the portable electronic device 2. When a face feature is present in the fetched image, the back light unit in the display 22 keeps lighting. On the contrary, when no face feature is present in the fetched image, the back light unit in the display 22 is turned off for saving electrical power.

The face detecting unit 25 can be replaced by software unit in an internal memory of the MCU 24.

## Claims

1. A method for automatically controlling a back light unit (26) in a display (22) of a portable electronic device (2), the portable electronic device comprising an image-fetching unit (23) and a micro processor unit (24) to control the back light unit, the method comprising:
setting a time threshold;
activating the image-fetching unit (23) to fetch an image when the back light unit (26) is turned on for a duration longer than the time threshold; and
keeping turning on the back light unit (26) when the fetched image contains a user face feature.

2. The method in claim 1, further comprising:
turning off the back light unit (26) when the fetched image does not contain a user face feature.

3. The method in claim 1, wherein the image-fetching unit (23) is a camera module, a camera or a webcam.

4. The method in claim 3, wherein the algorithm is a neural network face-feature algorithm to identify human face feature in the fetched image.

5. The method in claim 3, wherein the algorithm is a color-based face-feature algorithm to identify human face feature in the fetched image.

6. The method in claim 3, wherein the algorithm is a rule-based face-feature algorithm to identify human face feature in the fetched image.

7. The method in claim 3, wherein the algorithm is an elliptical edge face-feature algorithm to identify human face feature in the fetched image.

8. The method in claim 1, wherein the algorithm is stored in an internal memory of the micro processor unit (24).

9. The method in claim 1, wherein the micro processor unit (24) is electrically connected to a face detecting unit.

10. The method in claim 9, wherein the face detecting unit (23) is a read only memory (ROM), a random accessing memory (RAM) or an extended memory.

11. The method in claim 10, wherein the algorithm is stored in the ROM, the RAM or the extended memory.

12. The method in claim 1, wherein the image-fetching unit (23) fetches an image at front side thereof.

13. The method in claim 1, wherein the portable electronic device (2) is a mobile phone, a personal digital assistant (PDA) or a laptop computer.

14. A portable electronic device (2) automatically controlling a back light unit (26) in a display (22) thereof, comprising:
a micro processor unit (24);
an image-fetching unit (23) electrically connected to the micro processor unit (24); and
a back light unit (26) electrically connected to the micro processor unit (24),
wherein the micro processor unit (24) is configured to activate the image-fetching unit (23) to fetch an image after the back light unit (26) is turned on for a duration longer than a time threshold, and
the micro processor unit (24) is configured to turn on the back light unit (26) when the fetched image contains a user face feature.

15. The portable electronic device in claim 14, wherein the image-fetching unit (23) is a camera module, a camera or a webcam.

16. The portable electronic device in claim15, wherein the micro processor unit (24) uses a neural network face-feature algorithm to identify human face feature in the fetched image.

17. The portable electronic device in claim 15, wherein the micro processor unit (24) uses a color-based face-feature algorithm to identify human face feature in the fetched image.

18. The portable electronic device in claim 15, wherein the micro processor unit (24) uses a rule-based face-feature algorithm to identify human face feature in the fetched image.

19. The portable electronic device in claim 15, wherein the micro processor unit (24) uses an elliptical edge face-feature algorithm to identify human face feature in the fetched image.

20. The portable electronic device in claim 14, wherein the portable electronic device (2) is a mobile phone, a personal digital assistant (PDA) or a laptop computer.

21. The portable electronic device in claim 14, wherein the micro processor unit (24) is electrically connected to a face detecting unit (25).

22. The portable electronic device in claim 21, wherein the face detecting unit (25) is a read only memory (ROM), a random accessing memory (RAM) or an extended memory.

23. The portable electronic device in claim 22, wherein an algorithm is stored in the read only memory (ROM), the random accessing memory (RAM) or an extended memory.

24. The portable electronic device in claim 14, wherein the micro processor unit (24) further comprises a software unit to identify human face feature in the fetched image.
